# DEMANDE DE BREVET EUROPEEN

(11) **EP 1 780 184 A1**
(43) Date de publication de la demande: **02.05.2007**
(21) Numéro de dépôt: 06291646.5
(22) Date de dépôt: 24.10.2006
(51) Int. Cl.: C04B 28/02, C04B 14/14

(54) **Procédé de renforcement sur site d'un élément de construction et élément de construction renforcé**

(30) Priorité: 25.10.2005 FR 0510880
(71) Demandeur: M. Lefevre S.A., 75008 Paris (FR)
(72) Inventeur: Menard Marc-Henry, 75008 Paris (FR)
(74) Mandataire: de Kernier, Gabriel

(57) **Abrégé**

Procédé de renforcement sur site d'un élément de construction (1) existant par insertion à l'intérieur dudit élément de construction (1) d'éléments de reprise d'efforts, dans lequel on insère après forage à l'intérieur dudit élément de construction (1) un coulis (C) à base de liant hydraulique et de basalte, le basalte se présentant sous forme pulvérulente ou fibreuse mélangée au liant hydraulique.

## Description

La présente invention concerne le domaine du renforcement de structures en maçonnerie comprenant une pluralité de pièces, notamment de pierres et de briques, ou en béton.

La présente invention est particulièrement bien adaptée au renforcement de monuments dont certaines parties peuvent être préservées en raison d'un intérêt architectural, historique, artistique, etc.

Les pièces de la structure en maçonnerie peuvent être soumises à des efforts divers de compression, de traction, de cisaillement, de flexion, de flambement, etc., susceptibles d'engendrer des désordres et, à terme, la ruine.

Au cours du temps, de telles structures sont susceptibles de se dégrader pour diverses raisons, infiltrations d'eau provoquant une dégradation des pierres ou des briques constituant la structure, tassements du sol provoquant un mouvement des fondations du bâtiment et de ses superstructures, modifications du bâtiment postérieurement à sa construction, erreurs de conception dès l'origine, etc.

Par le passé, on a essayé de stabiliser des bâtiments par des tiges en acier traversant le bâtiment de part en part et pourvues à leurs extrémités d'un écrou de blocage. Or, on s'est aperçu que les désordres préexistants, loin de disparaître avaient tendance à se déplacer et parfois à s'aggraver. De plus, de telles barres sont particulièrement laides tant à l'intérieur qu'à l'extérieur du bâtiment.

On connaît par le brevet français n° 2 545 132 un procédé de consolidation de constructions en pierre au moyen d'une tige en résine armée de fibres de verre disposée dans une cavité creusée dans la construction, cavité dans laquelle on injecte un liant durcissable.

Le brevet FR 2 811 002 décrit un procédé de mise en traction d'un dispositif de renforcement de structure comprenant une tige en fibres de verre et résine époxyde scellée avec un liant durcissable en résine époxyde. Ce procédé donne également satisfaction.

Toutefois, il s'avère souhaitable d'améliorer la résistance mécanique des renforcements de même que leur tenue au feu. L'invention vise donc à proposer un procédé de renforcement amélioré.

Le procédé de renforcement sur site d'un élément de construction existant par insertion à l'intérieur dudit élément de construction d'éléments de reprise d'efforts, comprend l'insertion après forage ou creusement à l'intérieur dudit élément de construction d'un coulis à base de liant hydraulique et de basalte, le basalte se présentant sous forme pulvérulente ou fibreuse mélangée au ciment. Le coulis présente d'excellentes propriétés mécaniques, notamment en cisaillement et en compression, et thermiques, notamment en résistance au feu.

Dans un mode de réalisation, le liant hydraulique est de type anti-retrait. Le liant hydraulique peut être de type ultrafin. Le coulis peut consister en un mélange de ciment et de basalte, additionné d'eau et, éventuellement d'adjuvant. Le coulis peut comprendre de la chaux hydraulique naturelle et/ou un liant pouzzolanique.

Dans un mode de réalisation, l'élément de construction comprend de la maçonnerie, par exemple de pierre ou de brique.

Le basalte peut se présenter sous forme de fibres de longueur comprise entre 1 et 20 mm et de diamètre supérieur à 5 µm.

Dans un mode de réalisation, le coulis est mélangé afin d'obtenir une répartition satisfaisante du basalte dans le liant hydraulique, puis injecté dans des trous forés dans l'élément de construction.

Dans un mode de réalisation, on insère après forage à l'intérieur dudit élément de construction une tige à base de fibres de basalte, ladite tige étant scellée par le coulis. La tige peut présenter une résistance élevée en traction et/ou en compression.

Dans un mode de réalisation, ladite tige présente au moins une cannelure. La tige peut présenter une pluralité de cannelures axiales. La surface de contact entre la tige et le coulis est accrue, d'où une meilleure tenue au cisaillement.

Dans un mode de réalisation, ladite tige est rigide. La tige peut présenter un diamètre de l'ordre de 5 à 40 mm et une longueur de plusieurs mètres.

Dans un mode de réalisation, ladite tige est souple en flexion.

Un élément de construction renforcé peut comprendre un coulis à base de liant hydraulique et de basalte inséré à l'intérieur dudit élément de construction, le basalte se présentant sous forme pulvérulente ou fibreuse mélangée au liant hydraulique.

La tige peut être à base de fibres de basalte, ladite tige étant scellée par le coulis. La tige peut comprendre de la résine époxyde.

Grâce à l'invention, le renforcement comprend des matériaux naturels, sains et satisfaisant aux exigences de qualité environnementale. La prise du coulis est peu exothermique, d'où une réduction du risque dû à l'élévation de température.

La présente invention sera mieux comprise à l'étude de la description détaillée de quelques modes de réalisation pris à titre d'exemples nullement limitatifs et illustrés par les dessins annexés, sur lesquels :
- la figure 1 est une vue schématique en coupe d'un élément de construction renforcé selon un aspect de l'invention ;
- la figure 2 est une vue partielle agrandie montrant l'injection d'un coulis ;
- la figure 3 est une vue en élévation d'un pilier consolidé;
- la figure 4 montre l'agencement des tiges et armatures vues en plan ;
- la figure 5 est une vue en coupe d'une section horizontale d'une partie du pilier, montrant l'agencement d'une armature ;
- la figure 6 est une vue en perspective d'une corniche renforcée ; et
- la figure 7 est une vue en coupe transversale d'une tige de renforcement.

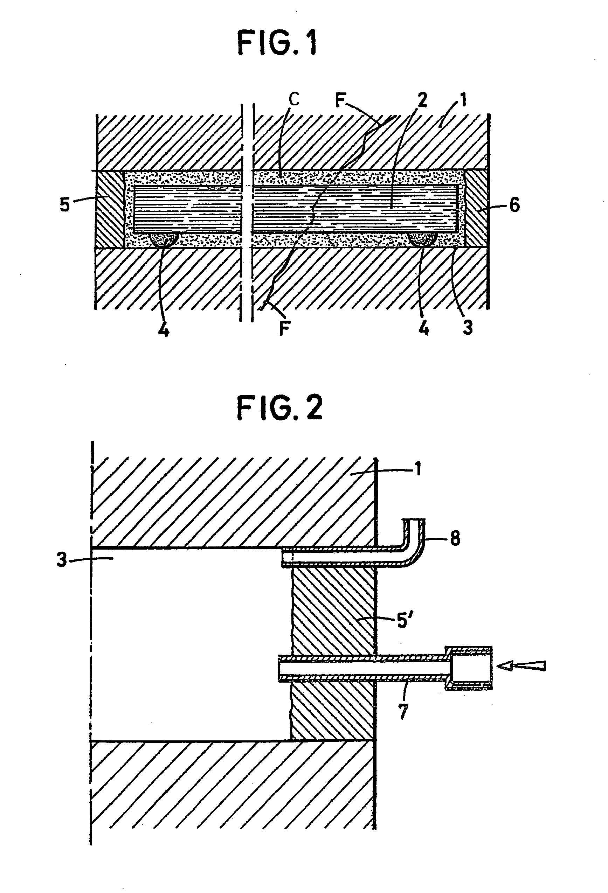

Comme on peut le voir sur la figure 1, une partie 1 d'une construction en pierre présente une ligne de fissuration F. Pour y remédier, la partie de construction 1 a reçu une armature constituée par une tige 2 à base de fibres de basalte posée dans une cavité constituée ici par un trou traversant 3. La longueur de la tige 2 est inférieure à celle du trou 3. Afin de laisser subsister un intervalle entre la paroi du trou 3 et la périphérie de la tige 2, la tige 2 peut reposer sur deux protubérances 4 rapportées, par exemple par collage ou par apport d'un matériau durcissable. L'intervalle compris entre la tige 2 et la paroi du trou 3 est rempli par un coulis C injecté à l'état fluide en procédant comme décrit plus loin. Les deux extrémités du trou 3 non-occupées par la tige 2 sont fermées par un mortier dont la couche de finition a été préparée de façon à présenter un aspect semblable à celui de la pierre.

La tige 2 peut présenter des cannelures afin d'accroître la surface de contact entre la surface extérieure de ladite tige 2 et le coulis C. La tige 2 peut comprendre des fibres de basalte et une résine synthétique, par exemple une résine époxyde. Généralement, la tige 2 est pleine et monobloc coupée à longueur légèrement inférieure à celle du trou 3. Le coulis C peut comprendre un liant hydraulique à faible retrait, c'est-à-dire à faible variation dimensionnelle lors de la prise, également appelé « anti-retrait », par exemple un ciment. Le liant hydraulique peut être de type ultrafin. Le coulis peut également comprendre du basalte mélangé au liant hydraulique. Le basalte peut se présenter sous forme pulvérulente, par exemple des fibres courtes d'un diamètre de l'ordre de 10 à 15 µm ou, préférablement, sous la forme de fibres longues. Les fibres longues peuvent présenter une longueur de l'ordre de 1 à 20 mm, préférablement de 3 à 8 mm et un diamètre de l'ordre de 10 à 15 µm.

Comme illustré sur la figure 2, si le trou 3 est un trou traversant, on réalise d'abord le bouchon 5 de la figure 1. Si le trou 3 est un trou borgne, on réalise un bouchon provisoire 5' en plâtre ou en mortier maigre dans lequel on place au moins deux tubes, à savoir un tube d'injection 7 et un tube d'évent 8, de façon à créer deux passages, l'un pour l'injection de coulis à l'état fluide ou pâteux, à savoir le tube d'injection 7, l'autre, le tube d'évent 8, pour la sortie de l'air expulsé par l'arrivée du coulis C dans le trou 3. Le tube 7 peut être pourvu d'un embout pour y introduire le bec d'une pompe à injection de coulis. Lorsque du coulis sort par le bout extérieur du tube 8, cela signifie que la cavité 3 est remplie de coulis C. Sur les figures 1 et 2, le trou 3 est représenté horizontal, mais il va de soi qu'il peut tout aussi bien être incliné ou vertical. Dans ce cas, le bouchon 5' et les tubes 7 et 8 sont placés dans la plus élevée des embouchures du trou 3.

Après durcissement du coulis C, on enlève le bouchon provisoire 5' et les tubes 7 et 8 et l'on met en place un bouchon de parement définitif approprié. L'on remarquera que dans le mode de réalisation illustré sur la figure 1, une tige 2 est disposée dans le trou 3 et est scellée avec le coulis C. Dans le mode de réalisation illustré sur la figure 2, le trou 3 est rempli de coulis C en l'absence de tige 2, ce qui présente l'avantage d'une mise en place plus facile et de matériau plus économique. Le mode de réalisation illustré sur la figure 2 est bien adapté pour que le renfort constitué uniquement de coulis C comprenant du liant hydraulique et du basalte reprenne des efforts de compression, de flambement ou de cisaillement. Le mode de réalisation illustré sur la figure 1 avec une tige 2 à base de fibres de basalte est bien adapté pour reprendre en outre des efforts de traction et/ou de flexion. A titre de variante, la tige 2 peut comprendre des fibres de verre.

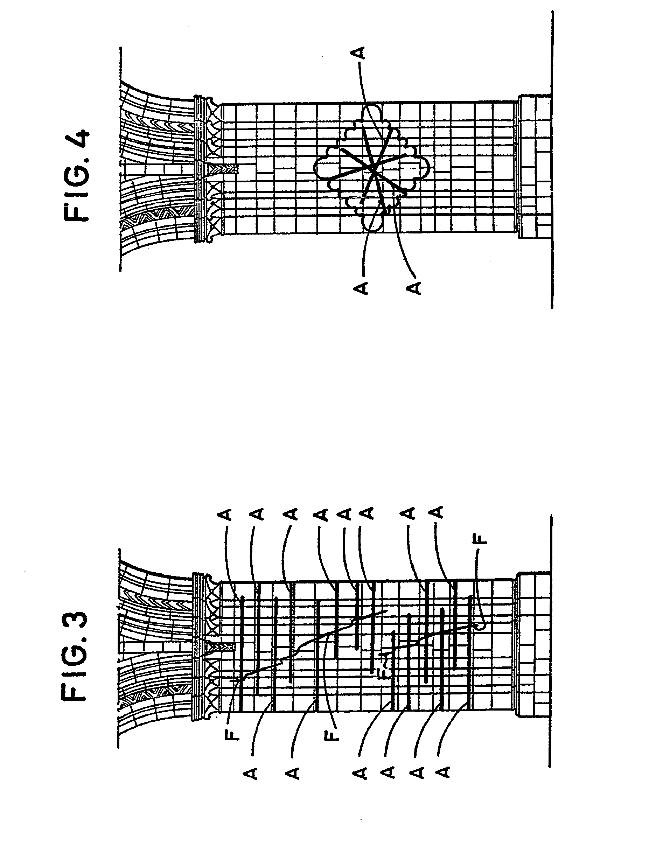

La figure 3 illustre le principe du remaillage d'une pile éclatée, ici un pilier d'église. Les lignes F-F sont des lignes d'éclatement, tandis que les lignes en traits forts A montrent l'agencement des armatures posées comme indiqué dans ce qui précède.

La figure 4 montre en plan une disposition possible des armatures A dans le pilier. Les armatures A sont à des niveaux différents, mais vues en plan, forment une configuration étoilée.

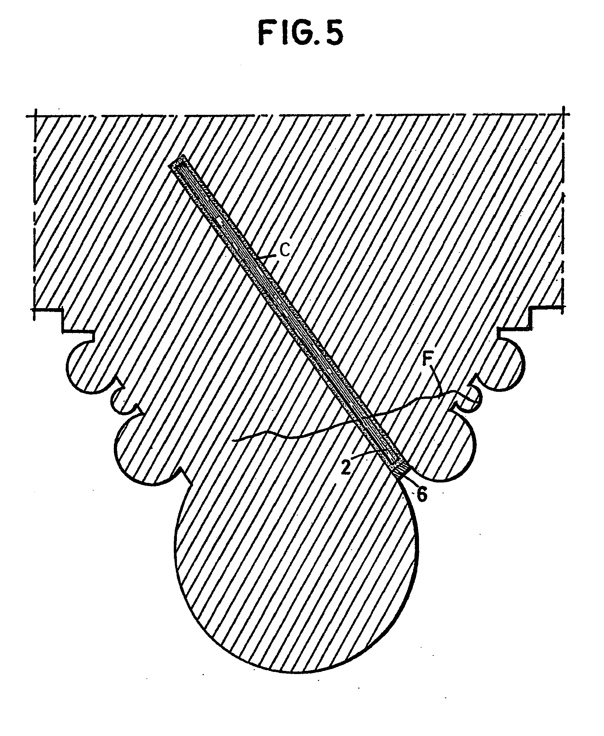

Comme illustré sur la figure 5, le trou 3 est un trou borgne foré de façon à traverser la ligne de fracture F. Dans le trou 3 est disposée une tige 2, un coulis C et le bouchon de parement 6 posé après solidification du coulis.

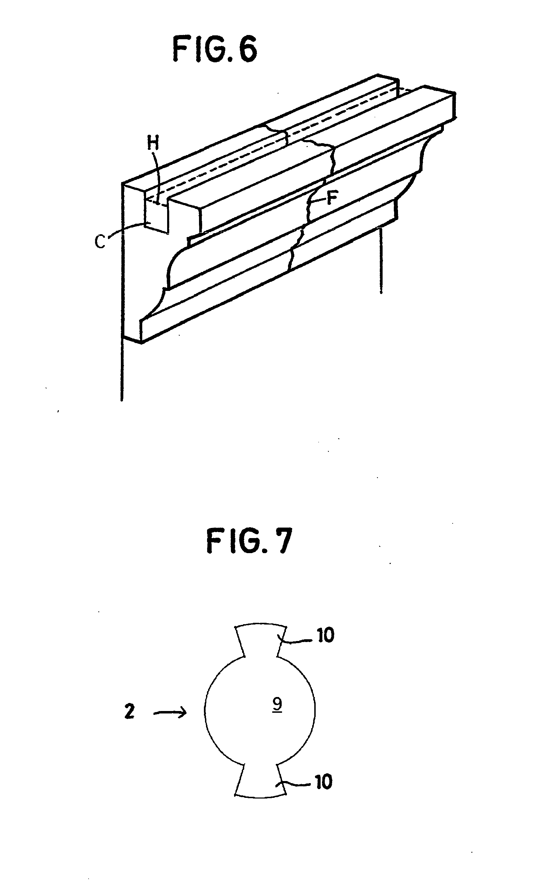

La figure 6 montre une corniche en pierre dans laquelle un renforcement a été réalisé en aménageant une cavité en forme de rainure dans laquelle on a placé un coulis C qui peut si nécessaire être équipé d'une ou plusieurs tiges non représentées. Après obturation des deux extrémités de la rainure, on verse le coulis dans ladite rainure, jusqu'à un niveau H légèrement inférieur à celui de la surface supérieure de la pierre. Après la prise du coulis, on peut alors terminer le remplissage de la rainure avec un mortier de finition approprié reconstituant l'aspect de la pierre.

Sur la figure 7, est illustrée en coupe la section transversale d'une tige 2. La tige 2 présente un noyau circulaire 9 et une pluralité de cannelures 10, ici au nombre de quatre, circonférentiellement régulièrement réparties autour du noyau 9 et monoblocs avec ce dernier. Les cannelures 10 s'étendent sensiblement axialement parallèlement les unes aux autres. A titre de variante, on pourrait également utiliser des tiges 2 de section carrée ou triangulaire, cannelées ou non. Les dimensions transversales de la tige 2 peuvent être comprises entre 10 et 40 mm, préférablement de l'ordre de 15 à 30 mm. Le diamètre du trou à percer pour disposer une tige 2 peut être choisi de façon qu'un intervalle subsistant entre la tige 2 et la paroi du trou soit de l'ordre de 5 mm. Afin d'augmenter la surface de contact entre le coulis et la tige 2, la surface extérieure de la tige 2 peut présenter des rugosités ou des stries.

Un élément de construction renforcé avec un insert en coulis chargé de basalte présente d'excellentes caractéristiques mécaniques notamment de résistance au cisaillement, ce qui garantit une excellente cohésion entre la partie existante et le renforcement. Par ailleurs, le coulis C comprenant du liant hydraulique et du basalte est particulièrement résistant au feu et à la température élevée. La prise du coulis C s'effectue avec une très faible élévation de température, de l'ordre de quelques degrés non susceptible de nuire à l'élément de construction existant. Le coulis C présente également une excellente résistance aux agents agressifs, notamment salins, ce qui le rend apte à être mis en oeuvre en milieu marin ou à proximité de routes recevant du sel de déneigement, par exemple pour renforcer des ponts. Le coulis C peut être dépourvu d'éléments pétroliers ou organiques, ce qui le rend économique, écologique et autorise son recyclage en tant que déchet banal de construction. Le coulis C est donc particulièrement intéressant sur le plan de la qualité environnementale et peut être un coulis hydraulique.

## Revendications

1. Procédé de renforcement sur site d'un élément de construction (1) existant par insertion à l'intérieur dudit élément de construction d'éléments de reprise d'efforts, dans lequel on insère après forage à l'intérieur dudit élément de construction un coulis (C) à base de liant hydraulique et de basalte, le basalte se présentant sous forme pulvérulente ou fibreuse mélangée au liant hydraulique.

2. Procédé selon la revendication 1, dans lequel le liant hydraulique est de type anti-retrait.

3. Procédé selon l'une quelconque des revendications précédentes, dans lequel l'élément de construction comprend de la maçonnerie.

4. Procédé selon l'une quelconque des revendications précédentes, dans lequel le coulis est mélangé puis injecté dans des trous forés dans l'élément de construction.

5. Procédé selon l'une quelconque des revendications précédentes, dans lequel on insère après forage à l'intérieur dudit élément de construction une tige (2) à base de fibres de basalte, ladite tige étant scellée par le coulis.

6. Procédé selon l'une quelconque des revendications précédentes, dans lequel ladite tige présente au moins une cannelure (10).

7. Procédé selon l'une quelconque des revendications précédentes, dans lequel ladite tige est rigide.

8. Procédé selon l'une quelconque des revendications 1 à 6, dans lequel ladite tige est souple.

9. Elément de construction renforcé, **caractérisé par le fait qu'**il comprend un coulis (C) à base de liant hydraulique et de basalte inséré à l'intérieur dudit élément de construction (1), le basalte se présentant sous forme pulvérulente ou fibreuse mélangée au liant hydraulique.

10. Dispositif selon la revendication 9, comprenant une tige (2) à base de fibres de basalte, ladite tige étant scellée par le coulis.
